Europäisches Patentamt

European Patent Office

Office européen des brevets

(19)

(11) Publication number: **0 318 609 B1**

## EUROPEAN PATENT SPECIFICATION

(12)

(45) Date of publication of patent specification: **16.02.94**  (51) Int. Cl.⁵: **C08F  10/06**, C08F 2/00

(21) Application number: **87117848.9**

(22) Date of filing: **02.12.87**

(54) **Polypropylene impact copolymer reactor control system.**

(43) Date of publication of application:
**07.06.89 Bulletin  89/23**

(45) Publication of the grant of the patent:
**16.02.94 Bulletin  94/07**

(84) Designated Contracting States:
**AT BE CH DE ES FR GB GR IT LI LU NL SE**

(56) References cited:
**EP-A- 0 012 259**      **EP-A- 0 027 474**
**EP-A- 0 111 341**      **US-A- 3 726 849**
**US-A- 3 998 995**      **US-A- 4 620 049**

(73) Proprietor: **UNION CARBIDE CORPORATION**
**39 Old Ridgebury Road**
**Danbury Connecticut 06817(US)**

(72) Inventor: **Ardell, George Graham**
**228 Bird Court**
**South Charleston West Virginia 25303(US)**
Inventor: **Geck, Reginald Walter**
**425 Navajo Drive**
**Victoria Texas 77904(US)**
Inventor: **Jenkins, John Mitchell, III**
**1405 Village Drive**
**South Charleston West Virginia 25309(US)**
Inventor: **Sheard, William George**
**227 Henson Avenue, Apt. No. 5**
**South Charleston West Virginia 25303(US)**

(74) Representative: **Weinhold, Peter, Dr. et al**
**Patentanwälte Dr. V. Schmied-Kowarzik**
**Dipl.-Ing. G. Dannenberg**
**Dr. P. Weinhold**
**Dr. D. Gudel**
**Dipl.-Ing. S. Schubert**
**Dr. P.**
**Barz**
**Siegfriedstrasse 8**
**D-80803 München (DE)**

EP 0 318 609 B1

## Description

The invention pertains to the copolymerization of propylene and other alpha-olefins such as ethylene. More particularly, the invention pertains to a system for controlling copolymer production rate and composition in an impact copolymer polypropylene production system.

The invention is herein described with reference to systems for producing copolymerizations of propylene and ethylene. However, the principles of the invention may be readily applied to control other propylene-alpha-olefin copolymerizations such as propylene-butene and propylene-hexene systems.

"Polypropylene impact copolymers" are polymers which are composed of a polypropylene homopolymer phase which is intimately mixed with one or more ethylene-propylene copolymer phases. This mixture results in a product which has good impact resistance and good stiffness.

Impact copolymers are typically produced by two or more reactors in series. The first reactor typically produces polypropylene homopolymer which is then fed to a second reactor. Alternatively, the first reactor can be used to produce random copolymer which would then be fed to the second reactor. In the second reactor (and subsequent reactors, if any) the reactant composition is varied such that copolymers with varying fractions of ethylene and propylene are produced in each reactor and intimately mixed with the polymer from the previous reactors.

Typically, the reaction in the reactors is catalyzed by a transition metal catalyst. In most cases the transition metal is titanium. The reactors themselves may be gas phase reactors, but are not necessarily so.

The production rate in these reactors may be controlled by catalyst feed rate or by the partial pressures of the monomers. Typically the composition of the polymer produced within a given reactor is determined by the relative partial pressures of the monomers with that reactor. However, if the second and subsequent reactors in the series are solely dependent upon the residual catalyst contained in the polymer received from the previous reactor, the monomer partial pressures in a given reactor will determine both the reaction rate within the reactor as well as the relative fractions of ethylene and propylene in the copolymer thereby produced.

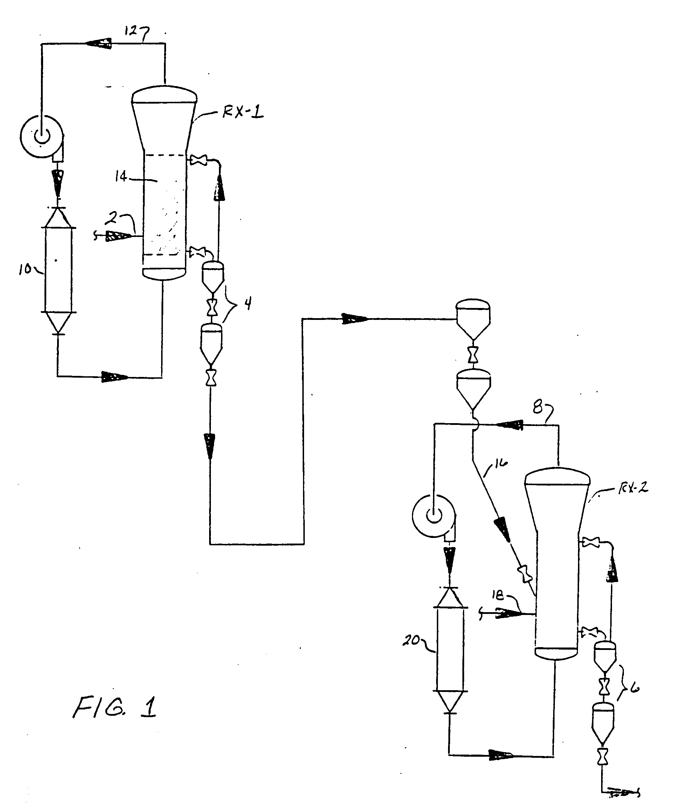

Fig. 1 illustrates a two-reactor polymerization system used to produce polypropylene impact copolymer. Two-reactor systems of the type illustrated in Fig. 1 typically provide a catalyzed exothermic reaction (e.g. a fluidized bed 14) within a first reactor RX-1 for converting gaseous raw materials into solid product. Raw materials (such as propylene, ethylene, nitrogen, hydrogen, catalyst, cocatalyst and a selectivity control agent) are fed through an input stream 2 to the reaction system RX-1. The heat of reaction is removed from the reactor RX-1 by circulating a stream of gaseous raw materials 12 through a cooler 10. Reaction temperature may be controlled by adjusting water flow in cooler 10 which removes heat from the circulating gas stream 12. Solid product, in the form of polypropylene homopolymer or random copolymer containing active catalyst, is removed from reactor RX-1 by periodically discharging a small portion of the fluidized bed 14 into a product discharge system 4.

The second reactor RX-2 of the two-reactor system of Fig. 1 is designed to produce a copolymer of propylene and ethylene in intimate mixture with the solid homopolymer or random copolymer material produced by the first reactor RX-1. In this embodiment, the product stream 16 from the first reactor RX-1 (including e.g., homopolymer and active catalyst) is fed to the second reactor RX-2. Raw materials (e.g. ethylene and propylene) are fed via input stream 18 to the second reactor RX-2 to be polymerized by the still active catalyst in the homopolymer or random copolymer material within the reactor RX-1 product stream 16.

In the second reactor RX-2, alpha-olefin (ethylene) and propylene are copolymerized in intimate mixture with the propylene homopolymer or random copolymer to produce impact copolymer. The process is maintained by the addition of ingredients from RX-1 and input stream 18 and cooling is provided by the circulation of the gaseous stream 8 through a cooler 20. Product is periodically withdrawn at extractor 6.

The catalyst which is fed to the first reactor RX-1 catalyzes the polymerization of propylene (and optionally ethylene). The quantity of polymer produced by a given quantity of the catalyst is relatively constant. It is normal practice, therefore, to control the production rate in the first reactor RX-1 by varying the catalyst feed rate to that reactor.

In the embodiment of Fig. 1, no catalyst is added to the second reactor RX-2. The reaction within reactor RX-2 is thus catalyzed entirely by catalyst contained in the polymer coming from the first reactor RX-1. Since the quantity of catalyst in the second reactor RX-2 is generally uncontrolled, the reaction rate must be controlled by other means, such as by manipulating the partial pressures of the reacting components in the cycle gas.

Typical objectives for the operation of a second or subsequent reactor RX-2 in a multi-reactor chain process such as shown in Fig. 1 include maintaining prescribed values for the fraction (hereinafter called "$F_c$") of the final product (e.g., impact polypropylene) that is created in the second reactor and for the fraction (hereinafter called "$E_c$") of ethylene contained in the copolymer fraction which is produced in reactor RX-2.

$F_c$ (the fraction of total product that is created in the second reactor RX-2) depends in general upon the combination of partial pressures of propylene ($C_3H_6$, hereinafter "C3") and ethylene ($C_2H_4$, hereinafter "C2") that exist in the reaction system RX-2. With some catalyst systems, however, catalyst or cocatalyst may be added to the second reactor to control $F_c$. $E_c$ (the fraction of ethylene that is incorporated in the copolymer produced in reactor RX-2) depends upon the relative partial pressures of ethylene and propylene.

In general, increasing the ratio of C3 to C2 decreases $E_c$ and decreasing the ratio of C3 to C2 increases $E_c$. Control of the process to attain the desired product properties thus requires the manipulation of interactive process conditions relating $F_c$ and $E_c$. An optimal process control system will thus provide a high degree of control of these individual process variables while compensating for their interaction.

It is therefore an object of the invention to provide a system for controlling $F_c$ and $E_c$ in a polymerization system which produces impact copolymer.

It is a further object of the invention to provide a polymerization control system which takes into account the interaction between $F_c$ control and $E_c$ control in an impact copolymer polypropylene production system.

EP-A-27474 describes a process for producing polyolefin having desired physical properties, in particular melt index and/or density, by polymerization, in a single reactor, of olefin in the presence of a Ziegler catalyst and hydrogen.

Process control is mainly achieved through high speed gas chromatography coupled with a computer system. Apparently said process is not affected by problems concerning $F_c$.

The above and other objects of the invention are met by providing a polypropylene production system including a system for controlling $F_c$ and $E_c$, wherein the relationship between $E_c$ and the relative partial pressures of ethylene and propylene is modeled, the relationship between the combination of partial pressures of ethylene and propylene and $F_c$ is modeled, the amount of material being produced in the reactor is calculated, and the modeled relationships and measured process conditions are used to predict $E_c$. Measured results from laboratory analysis of product samples are used to correct the predicted $E_c$ and to calibrate the model relationships. $F_c$ is controlled by a production rate controller whose set point is adjusted in proportion to the production rate in the first reactor to achieve the desired $F_c$. $E_c$ is controlled by an $E_c$ controller whose set point is adjusted according to a product recipe to achieve the desired $E_c$. The calculated production rate and predicted value of $E_c$ are employed as feedback to production rate and $E_c$ controllers as if they were directly measured quantities.

Specifically, the present invention provides a process for controlling the production of a copolymer of propylene and a second alpha-olefin during the operation of a continuous catalytic process controlled by controller devices, said process being (i) one for the production of a product comprising a second copolymer based on propylene and one other alpha-olefin intimately mixed with a first polymer, i.e., a homopolymer of propylene or a random copolymer of propylene, and (ii) carried out in two or more polymerization reactors connected in series, said control relating to the fraction $F_c$ of (iii) the second copolymer produced in the gas phase in a second series of one or more reactors RX-2, based on total product created and to (iv) the fraction $E_c$ of said other alpha-olefin which is incorporated in the second copolymer produced in RX-2, comprising the following steps:

(a) in a first series of one or more reactors RX-1, in the presence of a catalyst and under polymerization conditions, producing said first polymer in admixture with active catalyst at a specified production rate, and transferring the mixture to RX-2; and

(b) introducing into RX-2, propylene and said other alpha-olefin, under polymerization conditions, and changing the partial pressures of propylene and said other alpha-olefin in RX-2 in accordance with the following algorithm:

(1) setting $F_c$ and $E_c$ setpoints at desired values;

(2) measuring the current production rate in RX-1;

(3) calculating the desired production rate setpoint of RX-2;

(4) calculating the current production rate in RX-2 from various operating conditions of RX-2;

(5) calculating the error between the desired production rate setpoint and the current production rate in RX-2;

(6) using the error in step (5) in a process controller algorithm to compute a new controller device output, which will be a scaled partial pressure value for said other alpha-olefin in RX-2;

(7) measuring the current $E_c$ in RX-2;

(8) calculating the error between the desired $E_c$ setpoint and the current $E_c$;

(9) using the error in step (8) in a process controller algorithm to compute a new controller device output, which will be a ratio of partial pressures of propylene to said other alpha-olefin;

(10) multiplying the ratio of step (9) times the experimentally calculated relative reactivity of propylene to said other alpha-olefin;

(11) adding one to the product of step (10);

(12) calculating the new partial pressure of said other alpha-olefin in RX-2 by dividing the scaled partial pressure referred to in step (6) by the sum of step (11);

(13) calculating the new propylene partial pressure in RX-2 by multiplying the quotient of step (12) times the ratio of partial pressures of propylene to said other alpha-olefin; and

(14) using the new partial pressures calculated in steps (12) and (13) as setpoints for the devices controlling the partial pressures of propylene and said other alpha-olefin in RX-2.

A preferred production rate controller is configured to manipulate a derived relationship amongst the propylene and ethylene partial pressures and relative propylene and ethylene reactivities in order to control production rate. An $E_c$ controller is configured to manipulate the propylene and ethylene partial pressure ratio in order to control the $E_c$. Computer programming may be provided to convert output values from the production rate and $E_c$ controllers into propylene and ethylene partial pressure set points and to compensate for or "decouple" the interactions between these highly related process control parameters.

The invention will be described in greater detail below by way of reference to the following drawings, in which:

Fig. 1 is a schematic illustration of a two-reactor impact copolymer polypropylene polymerization system including a second reactor wherein the instant invention may be embodied;

Fig. 2 is a schematic illustration of one embodiment of the invention for controlling $E_c$ and $F_c$ within an impact copolymer polypropylene production system; and

Fig. 3 is a schematic illustration of a process according to the invention for converting production rate and $E_c$ data into propylene and ethylene concentration set points in such a manner as to decouple the interaction of propylene and ethylene partial pressures.

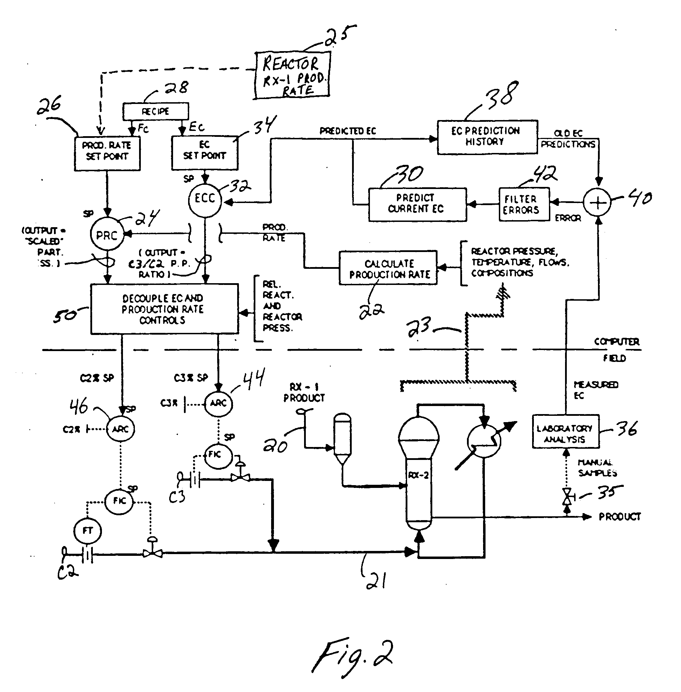

Fig. 2 illustrates $E_c$ and $F_c$ control within a reaction system for producing impact copolymer polypropylene.

Illustrated in Fig. 2 is a reactor RX-2 which may be a fluidized bed reactor. The reactor RX-2 may be the second reactor of a two-reactor impact copolymer polypropylene polymerization system of the type illustrated in Fig. 1 (the first reactor of the system, such as RX-1 of Fig. 1, not being shown in Fig. 2). Alternatively, the reactor RX-2 of Fig. 2 may be the last or an intermediate reactor within a multi-reactor (n greater than 2) system. For the purpose of the instant explanation, it may be assumed that RX-2 is the second reactor of a two-reactor system.

In the embodiment of Fig. 2, an input stream 20 including propylene homopolymer or random copolymer containing approximately 20-1000 parts per million active catalyst is provided to reactor RX-2. An input stream 21 may provide additional raw materials such as ethylene and propylene. In general, the temperature range within reactor RX-2 will be about 40-120° C. at a pressure of about 0.28-3.45 MPa absolute (40-500 p.s.i.a.).

The reaction or production rate in reactor RX-2 depends upon the partial pressures of both C2 and C3 since all catalyst comes in with the solid feed from the earlier reactor RX-1. The fraction $E_c$ of the product made in reactor RX-2 that contains C2 depends upon the ratio of the partial pressure of C3 to the partial pressure of C2 in reactor RX-2. A change in either partial pressure affects both production rate and $E_c$ and the controls for these quantities will interact strongly.

The invention provides a method for controlling $F_c$ and $E_c$ and for "decoupling" the interaction between the ethylene and propylene partial pressures to provide more precise control of the impact copolymer production process. Before discussing the decoupling operation, methods for monitoring/controlling $F_c$ and $E_c$ will be described.

Regarding $F_c$ control, various operating conditions of reactor RX-2, such as reactor pressure and reaction system temperatures, flows, and compositions, may be taken from reactor RX-2 and provided (symbolically illustrated at arrow 23 in Fig. 2) to a production rate calculator 22 to calculate the actual current production rate within the reactor RX-2. The actual production rate may be calculated using conventional heat and material balance techniques well known to those skilled in the art.

The calculated RX-2 production rate is provided to a comparator-controller 24 for comparison with a production rate "set point." The production rate set point is calculated at a production rate set point calculator 26 based on a target $F_c$ given in "recipe" 28 and on the production rate of the first reactor RX-1 as determined by a first reactor production rate calculator 25. The production rate "set point" is compared at comparator-controller 24 to the "actual" production rate as calculated by production rate calculator 22.

Simultaneously with the production rate calculations and comparisons described above, a predicted actual bed average $E_c$ is calculated at $E_c$ calculator 30, compared at $E_c$ comparator-controller 32 to an $E_c$ "set point," and stored in prediction history file 38. The $E_c$ set point is determined at $E_c$ set point calculator 34 based on recipe 28 to achieve a desired $E_c$. Alternatively, the $E_c$ set point may be provided directly by a user of the system through, for example, a computer input.

Because known $E_c$ measurement techniques require long periods of time to run (on the order of two to eight hours), bed average $E_c$ is predicted in the embodiment of Fig. 2. Periodically (for example, at 5 minutes intervals) an instantaneous $E_c$ is predicted from measured process parameters using a calibrated process model. The current bed average $E_c$ is then predicted from the instantaneous $E_c$ and the data stored in prediction history file 38 using an ideal stirred tank mixing model well known to those skilled in the art.

Periodically (for example, at one-hour intervals) during processing, a sample of product is extracted from the reactor RX-2 at extractor 35 and $E_c$ is measured 36 using known laboratory analysis techniques. The predicted bed average $E_c$ at the time of sampling is retrieved from prediction history file 38 and is compared to the measured $E_c$ laboratory value at comparator 40. Any "error" detected between the historical and measured values may be filtered using known mathematical filtering techniques 42. This filtered "error" value is used to recalibrate the $E_c$ predictive model, and the recalibrated model is used to correct the prediction history file 38. The corrected value of the current bed average $E_c$ value from $E_c$ prediction calculator 30 is provided to the $E_c$ comparator 32 for comparison with the $E_c$ set point 34.

The $E_c$ prediction history technique of Fig. 2 is preferred because it compensates for the long sample analysis delay and results in a more timely and accurate $E_c$ prediction. However, the invention would function effectively without the prediction history using measured $E_c$ values directly at comparator 32. Improved $E_c$ measurement techniques, if virtually instantaneous, would likely reduce the need for such "prediction".

Following the comparisons between the predicted $E_c$ and the $E_c$ set point at $E_c$ comparator-controller 32, and the comparison between the calculated actual production rate and the production rate set point at production rate comparator-controller 24, the differences between these respective "set points" and the calculated values are found and adjustments in the ethylene ("C2") and/or propylene ("C3") partial pressures are calculated at calculation unit 50 to adjust $E_c$ and/or production rate. These adjustments, in the embodiment of Fig. 2, are in turn converted to adjustments to the ethylene and propylene concentration set points C2% SP and C3% SP, respectively.

Thereafter, the respective set point values are provided to the ethylene and propylene concentration controllers 44 and 46 to affect the relative amounts of ethylene and propylene provided to the reactor RX-2 and to thereby control $E_c$ and $F_c$.

As indicated in Fig. 2, the output of the $E_c$ comparator-controller 32 is a ratio of the C3 to C2 partial pressures while the output of the production rate comparator-controller 24 is a partial pressure value which has been scaled to take into account the function of the "decoupling" routine which will be discussed in greater detail below. These values are provided to the calculation unit 50.

In order to more accurately calculate the required partial pressures within calculation unit 50, the relative reactivity ratio of C3 to C2 and the reactor system pressure are included in the calculation model. The relative reactivity ratio of C3 and C2 may be determined empirically but pressure is measured directly. For example, in one embodiment, the relative reactivity ratio is in the order of 0.277 (reactivity of C3 divided by reactivity of C2) and the reactor pressure may be in the range of 0.28-3.45 MPa absolute (40-500 p.s.i.a). In general, the type of polymerization catalyst used will have different reaction properties such as selectivities and operating condition ranges.

Because changing C2 and/or C3 partial pressures may change both production rate and $E_c$, the invention provides a method for calculating the required partial pressure set points from the respective controller outputs resulting from production rate comparator-controller 24 and $E_c$ comparator-controller 32. The relative reactivity ratio of C3 and C2 is included in the calculation to compensate for the interaction between the C3 and C2 partial pressures.

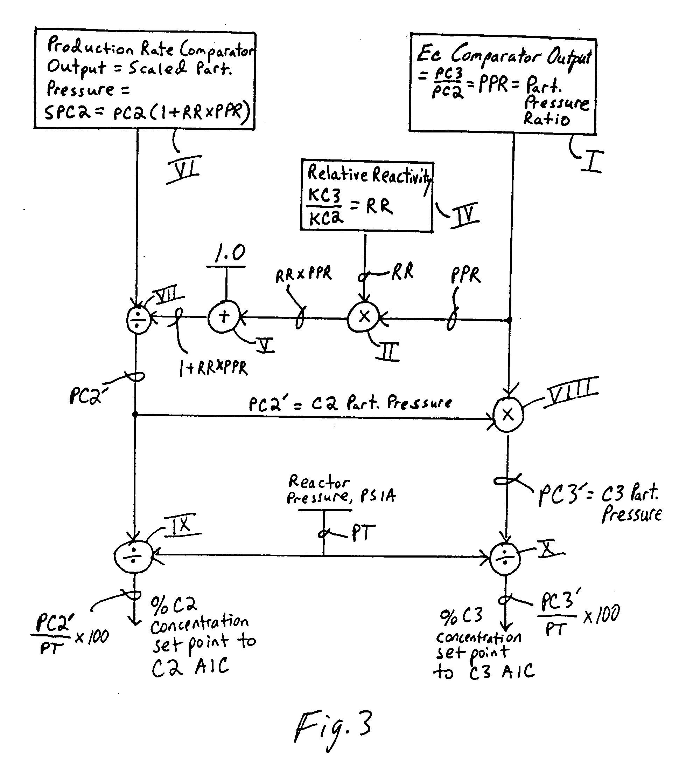

Fig. 3 illustrates a control scheme for decoupling the effects of the C3 and C2 partial pressures on production rate and $E_c$. The algorithm of Fig. 3 may be embodied in computer software resident within the calculation unit 50.

Derivation of the Decoupling Equation

The derivation of the formula used in the algorithm of Fig. 3 may be explained as follows. The following kinetic equation (using "*" as the multiplication symbol) may be used to represent the polymerization reaction of a single monomer a:

$$W = K_p {}^* Pa {}^* ([TM] {}^* Vr)/(1.0 + Kd {}^* THETA)$$

where:

$\quad$ W $\quad\quad$ = reaction rate of component a, LB/HR ( = 0.453 kg/h)

$K_p$    = polymerization rate constant of component a, LB/HR/PSI/MOL of TM (1lb = 0.453 kg; 1psi = 6.89 kPa)

Pa    = partial pressure of a, PSI

[TM]    = active transition metal concentration in catalyst, MOL/Ft$^3$ (1ft$^3$ = 0.028m$^3$)

Vr    = reactor volume, Ft$^3$

Kd    = polymerization rate decay constant, 1/HR

THETA    = residence time in reactor, HR

Since the total polymerization rate in reactor RX-2 is comprised of the C2 and C3 reactions, the above equation may be applied to those two components to calculate production rate:

PR2 = KC3*PC32*([TM]*Vr)/(1.0 + Kd*THETA) + KC2*PC22*([TM]*Vr)/(1.0 + Kd*THETA)

where:

PR2    = total reaction rate in RX-2, LB/HR

KC3    = $C_3H_6$ polymerization rate constant, LB/HR/PSI/MOL of TM

KC2    = $C_2H_4$ polymerization rate constant, LB/HR/PSI/MOL of TM

PC32    = $C_3H_6$ partial pressure, PSI

PC22    = $C_2H_4$ partial pressure, PSI

[TM]    = active transition metal concentration in catalyst, MOL/Ft$^3$

Vr    = reactor volume, Ft$^3$

Kd    = polymerization rate decay rate, 1/HR

THETA    = residence time in Rx 2, HR

Collecting terms and solving for the resulting term containing the partial pressures gives:

KC3*PC32 + KC2*PC22 = PR2*(1.0 + Kd*THETA)/([TM]*Vr)

Dividing by KC2 and letting

RR = KC3/KC2

and

PPR = PC32/PC22

gives

PC22*(1.0 + RR*PPR) = PR2*(1.0 + Kd*THETA)/(-[TM]*Vr*KC2)

Now, at steady state conditions, the term (1.0 + Kd* THETA)/)[TM]*Vr*KC2) can be assumed to be essentially constant, and the equation may be reduced to the following:

PR2 = X*[PC22*(1.0 + RR*PPR)]

where

X = ([TM]*Vr*KC2)/(1.0 + Kd*THETA)

The equation in this form defines a direct relation between production rate and scaled partial pressure value [X*PC22*(1.0 + RR*PPR)]. It can therefore serve as the basis for the decoupling calculation.

The output of the $E_c$ controller is logically interpreted as the ratio of partial pressures (i.e., PPR as defined previously) and the output of the production rate controller is logically interpreted as the scaled partial pressure value [X*PC22*(1.0 + RR*PPR)]. With the controller outputs so defined, a decoupling calculation can be defined using a value for the "relative reactivity" to get set points for C2 and C3 partial pressures. The "relative reactivity" is normally calculated from data obtained from the reactor or from off-line experiments.

The $E_c$ controller output is thereafter multiplied by the "relative reactivity ratio" (RR), added to 1.0, and multiplied by X to get the term:

(1.0 + RR * PPR) * X

When the production rate controller output is divided by this term, the required C2 partial pressure (PC2') is obtained. Since the quantity X is divided by itself in the operation of the invention, and is therefore mathematically insignificant, its value need not be explicitly determined.

The $E_c$ controller output is multiplied by the required C2 partial pressure (PC2') to get the required C3 partial pressure (PC3'):

PC3' = PC2' * PPR

Finally, both partial pressures are divided by the current total reactor pressure PT to get concentration set points:

% C3 = 100* PC3'/PT
% C2 = 100* PC2'/PT

Decoupling Process

The operation of calculation unit 50 (Fig. 2) will now be discussed by way of reference to Fig. 3. Each of the steps illustrated in Fig. 3 may be carried out by a computer serving as calculation unit 50.

If a difference exists between the desired $E_c$ and calculated $E_c$ (see $E_c$ comparator-controller 32 of Fig. 2), this is an indication that the ratio of propylene (C3) to ethylene (C2) is not correct. The prescribed action therefore is to calculate adjustment in the ratio of propylene partial pressure ("PC3") to ethylene partial pressure ("PC2"), i.e. the output of the $E_c$ comparator-controller 32. In order to avoid changing the production rate when the $E_c$ is changed, the output of the $E_c$ comparator-controller 32 is provided to the calculation unit 50 in the form of a ratio (PPR) between the partial pressure of C3 (PC3) and the partial pressure of C2 (PC2). Calculation unit 50 then calculates the correct C3 and C2 partial pressures to achieve the desired $E_c$ without changing the production rate.

If a difference exists between the desired production rate and the calculated production rate (see production rate comparator-controller 24 of Fig. 2), this is an indication that the combination of C3 and C2 partial pressures is not correct. The prescribed action, therefore, is to calculate an adjustment in the propylene partial pressure ("PC3") and the ethylene partial pressure ("PC2").

In order to avoid changing the $E_c$ when the production rate is changed, the output of the production rate comparator-controller 24 is provided to the calculation unit 50 in the form of a scaled partial pressure value (SPC2). Calculation unit 50 then calculates the correct C3 and C2 partial pressures to achieve the desired production rate without changing the $E_c$.

If both reaction rate and $E_c$ are "off" from their desired values, then both adjustments are made simultaneously.

Step I in Fig. 3 corresponds to the input to the calculation unit 50 of the ratio between PC3 and PC2 (i.e. the partial pressure ratio PC3/PC2 = PPR) from the $E_c$ comparator-controller 32 of Fig. 2. The partial pressure ratio PPR is thereafter multiplied at Step II by the predetermined relative reactivity ratio (RR). The value 1 is then added to the product of RR and PPR at Step V to satisfy the relationship explained in the derivation of the decoupling equation.

The output of the production rate comparator 24 is provided in the form of a scaled partial pressure value SPC2 = PC2 x (1.0 + RR x PPR) to give a specific total reaction for a specified partial pressure ratio. [Step VI.] This scaled value is "unscaled" during the decoupling process. The scaled partial pressure value SPC2 is thus divided at Step VII by the value (1.0 + RR x PPR) to yield the required C2 partial pressure value PC2'. At Step VIII, the required C2 partial pressure value PC2' and the PPR value are multiplied to calculate the required C3 partial pressure (PC3'). C2 and C3 percent concentrations (% C2, % C3) are thereafter calculated from the required C2 and C3 partial pressure values PC2' and PC3', respectively, by dividing these values by reactor pressure PT at steps IX and X, respectively. These new concentrations PC2'/PT and PC3'/PT are sent to the respective C2 and C3 concentration controllers 46, 44 (Fig. 2) which change the flaw of C2 and C3 to the reactor to correct the $E_c$ and $F_c$ to the desired values.

The above calculations should be repeated periodically.

Computer Control

Computer control may be provided to manipulate the partial pressures of both C3 and C2, to control the production rate in the reactor RX-2, and to manipulate the ratio of the two partial pressures to control $E_c$ (see Fig. 3). A system computer or computers may also be provided to monitor the heat generated in the fluidized bed of reactor RX-2, the solid feed from an earlier reactor RX-1, and the propylene and ethylene material balances in the gas phase of the reaction cycle. From the data collected and from specified process, operational and/or geometric parameters, the current production or reaction rate in the fluidized bed may be calculated.

In Fig. 2, the system elements which may be readily adapted to computer software are indicated above the dotted central horizontal line and indicated COMPUTER. The various functions in the COMPUTER section may be incorporated within a single computer or a network of distributed computers. Those tied to the reactor components are shown below the dotted line and indicated as FIELD.

As stated above, the invention has been described in terms of a system for producing propylene-ethylene copolymer. It should be noted, however, that the invention may be readily adapted to other propylene-alpha-olefin copolymerizations such as propylene-butene and propylene-hexene systems.

**Claims**

1. A process for controlling the production of a copolymer of propylene and a second alpha-olefin during the operation of a continuous catalytic process controlled by controller devices, said process being (i) one for the production of a product comprising a second copolymer based on propylene and one other alpha-olefin intimately mixed with a first polymer, i.e., a homopolymer of propylene or a random copolymer of propylene, and (ii) carried out in two or more polymerization reactors connected in series, said control relating to the fraction of (iii) the second copolymer produced in the gas phase in a second series of one or more reactors (hereinafter referred to as RX-2), based on total product created (said fraction hereinafter referred to as $F_c$) and to (iv) the fraction of said other alpha-olefin which is incorporated in the second copolymer produced in RX-2 (hereinafter referred to as $E_c$), comprising the following steps:

(a) in a first series of one or more reactors (hereinafter referred to as RX-1), in the presence of a catalyst and under polymerization conditions, producing said first polymer in admixture with active catalyst at a specified production rate, and transferring the mixture to RX-2; and

(b) introducing into RX-2, propylene and said other alpha-olefin, under polymerization conditions, and changing the partial pressures of propylene and said other alpha-olefin in RX-2 in accordance with the following algorithm:

(1) setting $F_c$ and $E_c$ setpoints at desired values;

(2) measuring the current production rate in RX-1;

(3) calculating the desired production rate setpoint of RX-2;

(4) calculating the current production rate in RX-2 from various operating conditions of RX-2;

(5) calculating the error between the desired production rate setpoint and the current production rate in RX-2;

(6) using the error in step (5) in a process controller algorithm to compute a new controller device output, which will be a scaled partial pressure value for said other alpha-olefin in RX-2;

(7) measuring the current $E_c$ in RX-2;

(8) calculating the error between the desired $E_c$ setpoint and the current $E_c$;

(9) using the error in step (8) in a process controller algorithm to compute a new controller device output, which will be a ratio of partial pressures of propylene to said other alpha-olefin;

(10) multiplying the ratio of step (9) times the experimentally calculated relative reactivity of propylene to said other alpha-olefin;

(11) adding one to the product of step (10);

(12) calculating the new partial pressure of said other alpha-olefin in RX-2 by dividing the scaled partial pressure referred to in step (6) by the sum of step (11);

(13) calculating the new propylene partial pressure in RX-2 by multiplying the quotient of step (12) times the ratio of partial pressures of propylene to said other alpha-olefin; and

(14) using the new partial pressures calculated in steps (12) and (13) as setpoints for the devices controlling the partial pressures of propylene and said other alpha-olefin in RX-2.

2. A process according to claim 1, wherein step (7) includes the steps of:

(i) analyzing a sample of product from said reactor system to determine the actual fraction of said product which includes said second alpha-olefin;

(ii) comparing said actual fraction determined in step (i) with a predicted bed average second alpha-olefin fraction value obtained from a prediction history file of previous alpha-olefin fractional values predicted with an empirical relationship relating said fractional value to process conditions;

(iii) obtaining a corrected second alpha-olefin bed average fraction value at the time of sampling by filtering any error detected between the predicted and actual fraction values compared in step (ii);

(iv) recalibrating said empirical relationship with the filtered error between predicted and actual values; and

(v) correcting said prediction history file with said corrected second alpha-olefin fraction value from step (iii) and said recalibrated empirical relationship from step (iv).

3. The process of any one of claims 1 and 2, wherein said second alpha-olefin is selected from ethylene, butene and hexene.

**Patentansprüche**

1. Verfahren zur Steuerung der Herstellung eines Copolymers aus Propylen und einem zweiten $\alpha$-Olefin während des Betriebslaufs eines kontinuierlichen katalytischen Verfahrens, das durch Regelungsvorrichtungen gesteuert wird, wobei das genannte Verfahren (i) ein solches für die Herstellung eines Produkts ist, das ein zweites Copolymer, basierend auf Propylen und einem anderen $\alpha$-Olefin, in inniger Mischung mit dem ersten Polymer, z. B. einem Homopolymer aus Propylen und einem statistischen Copolymer aus Propylen, umfaßt, und (ii) durchgeführt wird in zwei oder mehreren in Reihe angeordneten Polymerisationsreaktoren, wobei die genannte Steuerung die Fraktion (iii) des zweiten Copolymers betrifft, hergestellt in der Gasphase in einer zweiten Reihe eines oder mehrerer Reaktoren (hier als RX-2 bezeichnet), bezogen auf das hergestellte Gesamtprodukt (diese Fraktion wird im folgenden als $F_c$ bezeichnet), und (iv) die Fraktion des genannten anderen α-Olefins, das in das zweite, in RX-2 hergestellte Copolymer eingebracht wird (hier als $E_c$ bezeichnet), wobei das Verfahren die folgenden Schritte umfaßt:

(a) Die Herstellung des genannten ersten Polymers in einer ersten Reihe eines oder mehrerer Reaktoren (hier als RX-1 bezeichnet) in Anwesenheit eines Katalysators und unter Polymerisationsbedingungen, in Mischung mit aktivem Katalysator bei einer speziellen Herstellungsgeschwindigkeit, und Weiterleitung der Mischung zu RX-2; und

(b) das Einführen von Propylen und dem genannten anderen α-Olefin unter Polymerisationsbedingungen in RX-2, und Veränderung der Partialdrücke von Propylen und dem genannten anderen α-Olefin in RX-2 in Übereinstimmung mit dem folgenden Algorithmus:

(1) Vorgehen der Sollwerts von $F_c$ und $E_c$ auf die gewünschten Werte;

(2) Messung der laufenden Herstellungsgeschwindigkeit in RX-1;

(3) Errechnen des gewünschten Sollwertes für die Herstellungsgeschwindigkeit in RX-2;

(4) Errechnen der laufenden Herstellungsgeschwindigkeit in RX-2 aus verschiedenen Betriebsbedingungen von RX-2;

(5) Errechnen der Abweichung zwischen dem gewünschten Sollwert der Herstellungsgeschwindigkeit und der laufenden Herstellungsgeschwindigkeit in RX-2;

(6) Verwendung der Abweichung aus Schritt (5) in einem Verfahrensregler-Algorithmus, um einen neuen Ausgabewert für die Reglervorrichtung zu berechnen, der zum skalierten Partialdruckwert für das genannte andere α-Olefin in RX-2 wird;

(7) Messung des laufenden $E_c$-Werts in RX-2;

(8) Errechnen der Abweichung zwischen dem gewünschten $E_c$-Sollwert und dem laufendem $E_c$-Wert;

(9) Verwendung der Abweichung aus Schritt (8) in einem Verfahrensregler-Algorithmus zur Berechnung eines neuen Ausgabewertes für die Reglervorrichtung, der einen Verhältniswert von Partialdrükken von Propylen zu dem genannten anderen α-Olefin darstellt;

(10) Multiplizieren des Verhältniswertes aus Schritt (9) mit der experimentell errechneten relativen Reaktivität von Propylen zu dem genannten anderen α-Olefin;

(11) Addieren von 1 zu dem Produkt aus Schritt (10);

(12) Errechnen des neuen Partialdrucks des genannten anderen α-Olefins in RX-2 durch Dividieren des in Schritt (6) genannten skalierten Partialdrucks durch die Summe aus Schritt (11);

(13) Errechnen des neuen Propylen-Partialdrucks in RX-2 durch Multiplizieren des Quotienten aus Schritt (12) mit dem Verhältniswert der Partialdrücke von Propylen zu dem genannten anderen α-Olefin und

(14) Verwendung der neuen Partialdrükke, errechnet nach Schritt (12) und (13) als Sollwert für die Regelvorrichtungen für die Partialdrücke von Propylen und des genannten anderen α-Olefins in RX-2.

2.  Verfahren nach Anspruch 1, worin Stufe 7 die folgenden Stufen umfaßt:

(i) Analysieren einer Produktprobe aus dem genannten Reaktorsystem, um die tatsächlich vorliegende Fraktion dieses Produktes, welche das genannte zweite α-Olefin umfaßt, zu bestimmen;

(ii) Vergleichen dieser tatsächlich vorliegenden, in Stufe (i) bestimmte Fraktion mit einem vorhergesagten Durchschnittswert der zweiten α-Olefinfraktion im Bett, der in dem Speicher vorherbestimmter Daten von früheren α-Olefinfraktionswerten, vorhergesagt aufgrund eines empirischen Verhältnisses bezüglich dieses Fraktionswertes zu den Verfahrensbedingungen, enthalten ist;

(iii) Erhalt eines berichtigten Durchschnittswertes der zweiten α-Olefinfraktion im Bett zur Zeit der Entnahme der Probe durch Ausfiltern eines evtl. gefundenen Fehlers zwischen dem vorausgesagten und dem tatsächlichen Fraktionswert, die in Stufe (ii) verglichen wurden;

(iv) Erneute Eichung dieses empirischen Verhältnisses aufgrund des ausgefilterten Fehlers zwischen den vorhergesagten und tatsächlichen Werten; und

(v) Berichtigung des Speichers der vorhergesagten Werte unter Verwendung dieses korrigierten Wertes der zweiten α-Olefinfraktion aus Stufe (iii) und des erneut geeichten empirischen Verhältnisses aus Stufe (iv).

3.  Verfahren nach einem der Ansprüche 1 und 2, worin das zweite α-Olefin ausgewählt wurde aus Ethylen, Buten und Hexen.

## Revendications

1. Procédé de régulation de la production d'un copolymère de propylène et d'une seconde alpha-oléfine au cours de la mise en oeuvre d'un procédé catalytique continu régulé par des dispositifs de commande, ledit procédé (i) étant un procédé de formation d'un produit comprenant un second copolymère à base de propylène et d'une autre alpha-oléfine en mélange intime avec un premier polymère, c'est-à-dire un homopolymère de propylène ou un copolymère statistique de propylène, et (ii) étant mis en oeuvre dans deux ou plus de deux réacteurs de polymérisation connectés en série, ladite régulation concernant la fraction (iii) du second copolymère produit dans la phase gazeuse dans une seconde série d'un ou plusieurs réacteurs (désignés ci-après par RX-2), sur la base du produit total formé (ladite fraction étant désignée ci-après par $F_c$) et (iv) la fraction de ladite autre alpha-oléfine qui est incorporée au second copolymère produit dans RX-2 (désignée ci-après par $E_c$), comprenant les étapes suivantes :

(a) dans une première série d'un ou plusieurs réacteurs (désignés ci-après par RX-1), en présence d'un catalyseur et dans des conditions de polymérisation, la production dudit premier polymère en mélange avec le catalyseur actif à une vitesse de production spécifiée, et le transfert du mélange à RX-2 ; et

(b) l'introduction dans RX-2 de propylène et de ladite autre alpha-oléfine, dans des conditions de polymérisation, et la modification des pressions partielles de propylène et de ladite autre alpha-oléfine RX-2 conformément à l'algorithme suivant :

(1) l'ajustement des points de réglage $F_c$ et $E_c$ aux valeurs désirées ;

(2) la mesure de la vitesse effective de production dans RX-1 ;

(3) le calcul du point de réglage de vitesse de production désiré de RX-2 ;

(4) le calcul de la vitesse effective de production dans RX-2 à partir de diverses conditions de fonctionnement de RX-2 ;

(5) le calcul de l'erreur entre le point de réglage de vitesse de production désiré et la vitesse effective de production dans RX-2 ;

(6) l'utilisation de l'erreur dans l'étape (5) dans un algorithme de commande de procédé pour calculer une donnée nouvelle de sortie de dispositif de commande, qui constituera une valeur de pression partielle proportionnelle pour ladite autre alpha-oléfine dans RX-2 ;

(7) la mesure de la valeur réelle de $E_c$ dans RX-2 ;

(8) le calcul de l'erreur entre le point de réglage désiré de $E_c$ et la valeur réelle de $E_c$ ;

(9) l'utilisation de l'erreur dans l'étape (8) dans un algorithme de commande de procédé pour calculer une donnée nouvelle de sortie de dispositif de commande, qui constituera un rapport des pressions partielles du propylène à ladite autre alpha-oléfine ;

(10) la multiplication du rapport de l'étape (9) par la réactivité relative, calculée expérimentalement, du propylène vis-à-vis de ladite autre alpha-oléfine ;

(11) l'addition d'une unité au produit de l'étape (10) ;

(12) le calcul de la pression partielle nouvelle de ladite autre alpha-oléfine dans RX-2 par division de la pression partielle proportionnelle mentionnée dans l'étape (6) par la somme de l'étape (11) ;

(13) le calcul de la nouvelle pression partielle de propylène dans RX-2 par multiplication du quotient de l'étape (12) par le rapport des pressions partielles du propylène à ladite autre alpha-oléfine ; et

(14) l'utilisation des pressions partielles nouvelles calculées dans les étapes (12) et (13) comme points de réglage des dispositifs de commande des pressions partielles de propylène et de ladite autre alpha-oléfine dans RX-2.

2. Procédé suivant la revendication 1, dans lequel l'étape (7) comprend les étapes :

(i) d'analyse d'un échantillon de produit provenant de l'ensemble de réacteurs pour déterminer la fraction réelle dudit produit qui comprend la seconde alpha-oléfine ;

(ii) de comparaison de la fraction réelle déterminée dans l'étape (i) à une valeur moyenne prévue de fraction de seconde alpha-oléfine dans le lit obtenue à partir d'un fichier prévisionnel de valeurs fractionnaires antérieures d'alpha-oléfine prévues au moyen d'une relation empirique entre ladite valeur fractionnaire et les conditions opératoires ;

(iii) d'obtention d'une valeur fractionnaire corrigée moyenne de seconde alpha-oléfine dans le lit au moment du prélèvement par filtration de n'importe quelle erreur détectée entre la valeur prévue et la valeur fractionnaire réelle comparées dans l'étape (ii).

(iv) de réétalonnage de ladite relation empirique avec l'erreur filtrée entre la valeur prévue et la valeur réelle ; et

(v) de correction dudit fichier prévisionnel avec ladite valeur fractionnaire corrigée de seconde alpha-oléfine de l'étape (iii) et ladite relation empirique réétalonnée de l'étape (iv).

3. Procédé suivant l'une quelconque des revendications 1 et 2, dans lequel la seconde alpha-oléfine est choisie entre l'éthylène, le butène et l'hexène.

FIG. 1

EP 0 318 609 B1

Fig. 2

13

Production Rate Comparator
Output = Scaled Part.
Pressure =
$SPC2 = PC2(1+RR \times PPR)$

$\underline{VI}$

Relative Reactivity
$\dfrac{KC3}{KC2} = RR$  $\underline{IV}$

Ec Comparator Output
$= \dfrac{PC3}{PC2} = PPR = $ Part.
Pressure
Ratio

$\underline{I}$

$1.0$

$RR \times PPR$  $RR$  $PPR$

$\underline{VII}$  $\div$  $+$  $\times$  $\underline{II}$

$\underline{V}$

$1 + RR \times PPR$

$PC2'$

$PC2' = C2$ Part. Pressure  $\underline{VIII}$  $\times$

$PC3' = C3$ Part.
Pressure

Reactor
Pressure, PSIA

$PT$

$\underline{IX}$  $\div$  $\div$  $\underline{X}$

$\dfrac{PC2'}{PT} \times 100$  % C2
concentration
set point to
C2 AIC

% C3
concentration
set point
to C3 AIC  $\dfrac{PC3'}{PT} \times 100$

Fig. 3